# EUROPÄISCHE PATENTANMELDUNG

(11) **EP 0 693 531 A2**
(43) Veröffentlichungstag der Anmeldung: **24.01.1996**
(21) Anmeldenummer: 95110776.2
(22) Anmeldetag: 11.07.1995
(51) Int. Cl.: C08L 77/00, C08K 7/02

(54) **Glasverstärkte Polyamidformmassen für Blasform-Anwendung**

(30) Priorität: 19.07.1994 DE 4425437
(71) Anmelder: BASF AKTIENGESELLSCHAFT, D-67056 Ludwigshafen (DE)
(72) Erfinder: Götz, Walter, Dr., D-67067 Ludwigshafen (DE); Pellkofer, Erich, D-67112 Mutterstadt (DE); Lohrbächer, Volker, D-69469 Weinheim (DE)

(57) **Zusammenfassung**

Thermoplastische Polyamidformmassen, enthaltend
A) 35 bis 98,5 Gew.-% eines Polyamids mit einer Viskositätszahl ≧ 220 ml/g
B) 0,5 bis 5 Gew.-% eines Olefinpolymerisates, aufgebaut aus
   b₁) 40 - 99,8 Gew.-% mindestens eines α-Olefins mit 2 - 8 C-Atomen,
   b₂) 0,2 - 20 Gew.-% einer ethylenisch ungesättigten Mono- oder Dicarbonsäure oder einem funktionellen Derivat einer solchen Säure,
C) 1 bis 60 Gew.-% eines faserförmigen Füllstoffes mit einer mittleren arithmetischen Faserlänge von 70 bis 180 µm
D) 0 bis 30 Gew.-% üblicher Zusatzstoffe und Verarbeitungshilfsmittel
wobei die Gewichtsprozente der Komponenten A) bis D) jeweils 100 % ergeben.

## Beschreibung

Die Erfindung betrifft thermoplastische Polyamidformmassen, enthaltend
A) 35 bis 98,5 Gew.-% eines Polyamids mit einer Viskositätszahl ≧ 220 ml/g
B) 0,5 bis 5 Gew.-% eines Olefinpolymerisates, aufgebaut aus
   b₁) 40 - 99,8 Gew.-% mindestens eines α-Olefins mit 2 - 8 C-Atomen,
   b₂) 0,2 - 20 Gew.-% einer ethylenisch ungesättigten Mono- oder Dicarbonsäure oder einem funktionellen Derivat einer solchen Säure,
C) 1 bis 60 Gew.-% eines faserförmigen Füllstoffes mit einer mittleren arithmetischen Faserlänge von 70 bis 180 µm
D) 0 bis 30 Gew.-% üblicher Zusatzstoffe und Verarbeitungshilfsmittel
wobei die Gewichtsprozente der Komponenten A) bis D) jeweils 100 % ergeben.

Weiterhin betrifft die Erfindung Verfahren zur Herstellung der erfindungsgemäßen Formmassen, deren Verwendung zur Herstellung von Formkörpern durch Blasformen, Profilextrusion und Rohrextrusion sowie die hierbei erhältlichen Blasformkörper, Profilextrudate und Rohrextrudate.

Polyamide sind eine Klasse von technischen Werkstoffen, die in vielen Bereichen Anwendung finden, da sie ein insgesamt interessantes Eigenschaftsspektrum aufweisen.

In einer Vielzahl von Anmeldungen werden Polyamidformmassen beschrieben, die für bestimmte Anwendungen gezielt modifiziert wurden. Nur beispielhaft sei die DE-A-26 22 973 genannt, in welcher eine Vielzahl von möglichen Schlagzähmodifiern für Polyamid beschrieben werden.

Zähmodifizierte Polyamide mit Ethylencopolymeren sind u.a. aus der EP-A-279 578 bekannt; Glasfaserhaltige Formmassen sind aus der DE-A 27 03 416 bekannt, welche Ethylen- oder Propylenhomopolymere enthalten, die mit ungesättigten Säuren gepfropft sind.

Die bekannten zähmodifizierten Polyamide lassen sich aber nur bedingt zu Blasformkörpern verarbeiten. Beim Blasformen wird allgemein ein Schlauch aus Polymerschmelze extrudiert, der zwischen den beiden Halbschalen des geöffneten Werkzeuges hängt. Anschließend wird das Werkzeug geschlossen und der Polymerschlauch durch Gas-Innendruck gegen das Werkzeug gepreßt, abgekühlt und entformt.

Wesentliche Voraussetzung bei dieser Verarbeitung ist, daß der Polymerschlauch beim Extrudieren in den Zeiträumen, wo er frei zwischen den Werkzeugen hängt, nicht abreißt, so daß der Formungsvorgang zu Ende geführt werden kann. Je nach Eigenschaften der Polymerschmelze ist die ohne Abriß extrudierbare Masse (Länge) des Schlauchs durch das Volumen des herstellbaren Formkörpers begrenzt. Wünschenswert ist darüberhinaus auch, daß der Schlauch nicht "durchhängt", da hierbei geringe Wandstärken in der oberen Hälfte und dickere Wandstärken in der unteren Hälfte entstehen. Hohlkörper mit stark unterschiedlichen Wandstärken sind zur Verwendung nicht geeignet, da die Belastbarkeit in der Regel von der Stelle mit der geringsten Wandstärke begrenzt wird. Die aus der JP-A 62/252 453 und WO-A 90/7549 bekannten Formmassen eignen sich daher nur sehr beschränkt für das Blasformverfahren, da die Schlauchfestigkeit zu gering ist.

Besonders problematisch ist die Gefahr eines Schmelzebruchs bzw. Durchhängens bei glasfaserverstärkten Polymerschmelzen, da diese eine hohe Dichte (und dadurch eine hohe Zugkraft auf den oberen Teil des Polymerschlauches) aufweisen und gleichzeitig die maximale Dehnbarkeit der Polymerschmelze bis zum Bruch bei diesen verstärkten Massen geringer ist als bei unverstärkten Polymeren.

Beide Faktoren werden von der sog. Schmelzesteifigkeit, die in erster Linie von der Schmelzeviskosität abhängt, bestimmt. Ideal wäre eine hohe Schmelzviskosität bei geringer Scherung - d.h. nach der Extrusion - aber eine niedrige Schmelzviskosität unter hohem Schergefälle - d.h. im Verarbeitungsextruder.

Folglich werden zum Blasformen üblicherweise hochmolekulare Polyamide eingesetzt wie aus der DE-A-38 31 243 und JP-A 60/171 133 bekannt.

Da das Konfektionieren hochmolekularer Polyamide mit Glasfasern wegen des dabei stattfindenden hohen Molekulargewichtsabbau problematisch ist, offenbart die EP-A 589 349 eine weitere Verfahrensvariante zur Vermeidung des Molekulargewichtsabbaus.

Dabei wird eine Mischung aus Glasfasern, geringen Mengen bestimmter, säuremodifizierter Kautschuke und Polyamid nach Konfektionieren durch Festphasen-Nachkondensation auf hohe Endmolekulargewichte des Polyamid eingestellt, so daß diese für das Blasformen verwendet werden können. Damit wird die Problematik des Molekulargewichtsabbaus beim Konfektionieren hochmolekularer Polyamide mit Glasfasern umgangen. Diese Schrift beschriebt auch die Notwendigkeit der Verwendung hochmolekularer Polyamide sowie der beschriebenen Ethylencopolymere. Ohne diese sind zum Blasformen geeignete Produkte nur schwer erhältlich.

Bei allen genannten Patenten werden Glasfasern, soweit überhaupt verwendet, als konventionelle Endlosfasern (Rovings) oder Schnittfasern (4 - 6 mm lange Faserbündel) eingesetzt. Durch Scherung im Extruder ergibt sich dann die Glasfaserlängenverteilung im Produkt, die zwar nicht erwähnt ist, bei üblicher Verarbeitung aber bei ca. 250 - 300 µm liegt (bezogen auf ein Produkt mit 25 % Glasfasergehalt) . Dabei ist zu berücksichtigen, daß die mittlere Faserlänge (bei gegebener Verarbeitung) im allgemeinen mit zunehmendem Faseranteil sinkt, da es zu erhöhten Faser-Faser-Wechselwirkungen in der Einarbeitungszone und damit zu vermehrtem Faserbruch kommt(F. Raumsteiner, R. Theysohn, Comp. Sci. Techn. 23 (1985) 231).

Der vorliegenden Erfindung lag daher die Aufgabe zugrunde, Polyamidformmassen zur Verfügung zu stellen, die sich verstärkt problemlos zu Blasformkörpern, Profilextrudaten, oder Rohrextrudaten verarbeiten lassen, so daß insbesondere Formkörper mit großem Volumen sowie gleichmäßiger Wanddickenverteilung aus diesen Massen herstellbar sind. Bei der Verarbeitung sollte eine sehr gute Fließfähigkeit gegeben sein.

Erfindungsgemäß wird diese Aufgabe durch die eingangs definierten Polyamidformmassen gemäß Anspruch 1 gelöst.

Bevorzugte Ausführungsformen sind den Unteransprüchen zu entnehmen.

Überraschenderweise wurde gefunden, daß die Verwendung besonders kurzer Glasfasern im Produkt, die zu einem nur geringen, aber vertretbaren - Rückgang der mechanischen Eigenschaften (Steifigkeit, Festigkeit) führt, aber zu einer deutlich verbesserten Verarbeitbarkeit beim Blasformen. Dies steht im Widerspruch zur normalen Spritzgußverarbeitung, wo in diesem Bereich der Faserlänge praktisch keine Veränderung der Verarbeitbarkeit festgestellt wird (erst bei >1 mm wird die Fließfähigkeit schlechter. Deshalb geht man bei Spritzgußprodukten allenfalls einen Kompromiß zwischen mechanischen Eigenschaften (steigen mit Faserlänge) und Isotropie (sinkt mit Faserlänge) ein, fordert aber meist eine möglichst hohe Faserlänge. Es wäre im Prinzip möglich, kurze Fasern durch sehr hohe Scherung im Extruder einzustellen. Dies erfordert jedoch einen hohen Energieverbrauch (hohe Antriebsleistung, geringer Durchsatz durch Energieeintrag über elektrischen Antrieb). Dabei werden nicht nur die Fasern, sondern auch das Polymer geschädigt.

Die verwendbaren Polyamide sind an sich bekannt. Beispiele hierfür sind Polyhexamethylenadipinsäureamid, Polyhexamethylenpimelinsäureamid, Polyhexamethylenkorksäureamid, Polyhexamethylenazelainsäureamid, Polyhexamethylensebacinsäureamid, Polyhexamethylendodekandisäureamid, Polyoctamethylenkorksäureamid, Polydodekamethylendodekandisäureamid, Poly-11-aminoundekansäureamid und Bis-(4-aminocyclohexyl)-methandodekansäureamid oder die durch Ringöffnung von Lactamen, z.B. Polycaprolactam oder Polylaurinlactam, erhaltenen Produkte. Auch Polyamide auf der Basis von Terephthal- oder Isophthalsäure als Säurekomponente und/oder Trimethylhexamethylendiamin, Bis-(4-aminocyclohexyl)-methan oder 2,2-Di-(4-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet. Als Beispiel hierfür seien Copolykondensate aus Terephthalsäure, Hexamethylendiamin und Caprolactam (PA 6/6T) genannt, sowie aus Terephthalsäure, Isophthalsäure, Adipinsäure und Hexamethylendiamin (PA 6T/6I), welche auch als ternäre Copolykondensate mit anderen polyamidbildenden Monomeren aufgebaut sein können: z.B. mit Adipinsäure (PA 6I/6T/66) oder mit alicyclischen Diaminen wie Bis(4-aminocyclohexyl)methan oder Bis(4-amino-3-methylcyclohexyl)methan.

Vorzugsweise setzt man teilkristalline Polyamide ein, bevorzugt PA 6, PA 66, PA 6T/6, PA 6/6T, PA 6T/6I, PA6T/66, PA 6T/6I/66, PA 66/6T (Copolykondensate aus Hexamethylendiamin, Adipinsäure, Caprolactam und Iso- bzw. Terephthalsäure) sowie PA 46.

Die Herstellung dieser Polyamide erfolgt in an sich bekannter Weise (s. z.B. Encyclopedia of Polymer Science and Engineering, Vol. 11, S. 315 bis 489, John Wiley & Sons, Inc. 1988.

Das Verhältnis von endständigen Säuregruppen zu endständigen Aminogruppen liegt vorzugsweise bei ca. 1 und kann durch Variation des Molverhältnisses der Ausgangsverbindungen gesteuert werden.

Die Viskositätszahl VZ der für Blasformen geeignete Polyamide beträgt allgemein ≧ 220 ml/g, bevorzugt ≧ 250 ml/g und insbesondere ≧ 270 ml/g. Diese werden üblicherweise nach ISO 307 oder DIN 53 727 an 0,5 gew.-%igen Lösungen in 96 gew.-%iger Schwefelsäure bei 25°C bestimmt.

Der Anteil der Polyamide in den Formmassen beträgt 35 bis 98,5, vorzugsweise 60 bis 89,3 und insbesondere 65 bis 84 Gew.-%.

Es können auch Mischungen verschiedener Polyamide eingesetzt werden.

Der Anteil der Olefinpolymerisate B) in den Formmassen beträgt 0,5 bis 5, vorzugsweise 0,7 bis 2,5 und insbesondere 1 bis 2 Gew.-%.

Diese sind aufgebaut aus:
b₁) 40 - 99,8, vorzugsweise 60 - 99 Gew.-% mindestens eines α-Olefins mit 2 - 8 C-Atomen,
b₂) 0,2 bis 20, vorzugsweise 1 - 10 Gew.-% einer ethylenisch ungesättigten Mono- oder Dicarbonsäure oder einem funktionellen Derivat einer solchen Säure.

Als geeignete α-Olefine b₁) seien geradkettige oder verzweigte Butene, Pentene, Hexene, Heptene, Octene genannt, wobei Ethylen und Propylen bevorzugt sind.

Geeignete Monomere b₂) sind Maleinsäure, Fumarsäure, Acrylsäure, Methacrylsäure, Itaconsäure oder deren funktionelle (reaktive) Derivate wie Anhydride oder Säureazide, wobei Maleinsäureanhydrid und Acrylsäure bevorzugt sind.

Die Olefinpolymerisate können darüberhinaus bis zu 50 Gew.-%, vorzugsweise bis zu 30 Gew.-% weiterer Monomere b₃) enthalten.

Beispiele für derartige Monomere, die unter den Verarbeitungsbedingungen keine Reaktion mit dem Polyamid eingehen, sind Acrylsäureester mit 4 bis 22 C-Atomen wie Methylacrylat, Methylmethacrylat, Butylacrylat, Ethylhexylacrylat, Cyclohexylacrylat und Ethylacrylat.

Vinylester von Säuren mit 1 bis 20 C-Atomen wie Vinylacetat oder Vinylpropionat, Vinylether mit 3 bis 20 C-Atomen wie Vinylbutylether, wobei Methacrylat und Butylacrylat bevorzugt sind.

Bevorzugt sind Olefinpolymerisate, welche keine Monomere b₃) enthalten.

Bevorzugte Olefinpolymerisate sind Ethylencopolymerisate oder -pfropfpolymerisate mit Acrylsäure oder Polymerisate aus Polypropylen sowie Ethylen-Propylencopolymerisate, welche mit Acrylsäure oder Maleinsäureanhydrid gepfropft sind.

Die Herstellung der vorstehend beschriebenen Olefinpolymerisate kann nach an sich bekannten Verfahren erfolgen, welche in der Literatur beschrieben sind.

Der Schmelzindex der Olefinpolymerisate liegt im allgemeinen von 1 bis 100 g/10 min, vorzugsweise 5 bis 25 g/10 min (gemessen bei 190°C und 2,16 kg Belastung). Der Zug-E-Modul ist vorzugsweise >130, insbesondere >150 MPa (gemessen gemäß ISO 527) .

Selbstverständlich können auch Mischungen der vorstehenden Olefinpolymerisate eingesetzt werden.

Der Anteil der Komponente B) in den erfindungsgemäßen Formmassen wird üblicherweise durch Hydrolyse des PA-Granulats in 20 %iger HCl bestimmt. Der verbliebene unlösliche Rückstand (Gelgehalt) entspricht hierbei dem Gehalt an Komponente C) und B), wobei z.B. der Glasfasergehalt (bestimmt wie nachstehend beschrieben) vom erhaltenen Wert substrahiert wird. Eine andere Möglichkeit zur Bestimmung des Kautschukgehaltes ist die Festkörper-NMR-Methode.

Als Komponente C) enthalten die erfindungsgemäßen Polyamidformmassen 1 bis 60, bevorzugt 10 bis 35 und insbesondere 15 bis 30 Gew.-% eines faserförmigen Füllstoffes mit einer mittleren arithmetischen Faserlänge von 70 bis 150 µm, bevorzugt 80 bis 150 µm und insbesondere 90 bis 125 µm. Der mittlere Durchmesser beträgt im allgemeinen von 8 bis 20 µm, bevorzugt von 10 bis 14 µm

Als bevorzugte faserförmige Füllstoffe seien Kohlenstoffasern, Aramid-Fasern und Kaliumtitanat-Fasern genannt, wobei Glasfasern als E-Glas besonders bevorzugt sind.

Die gewünschte Faserlänge kann z.B. durch Mahlen in einer Kugelmühle eingestellt werden, wobei eine Faserlängenverteilung entsteht.

Die Reduzierung der Faserlänge führt, wenn die mittlere Faserlänge <200 µm ist, zu einem rieselfähigen Schüttgut, das wie ein Pulver in das Polymer eingemischt werden kann. Aufgrund der geringen Faserlänge tritt beim Einarbeiten nur noch eine geringe weitere Verkürzung der Faserlänge ein.

Der Fasergehalt wird üblicherweise nach Veraschen des Polymeren bestimmt. Zur Bestimmung der Faserlängenverteilung wird im allgemeinen der Ascherückstand in Silikonöl aufgenommen und bei 20-facher Vergrößerung des Mikroskops fotografiert. Auf den Bildern können bei mindestens 500 Fasern die Länge ausgemessen und der arithmetische Mittelwert daraus berechnet werden.

Bei der Verwendung von Glasfasern können diese zur besseren Verträglichkeit mit dem thermoplastischen Polyamid mit einer Schlichte und einem Haftvermittler, bevorzugt einem Aminosilan, ausgerüstet sein.

Die Komponente C) kann gegebenenfalls bis zu 35 Gew.-%, bevorzugt bis zu 20 Gew.-%, bezogen auf C), durch einen mineralischen Füllstoff wie Wollastonit, Kaolin, Quarz, Glimmer oder Calciumcarbonat ersetzt sein.

Neben den wesentlichen Komponenten A), B) und C) können die erfindungsgemäßen Formmassen übliche Zusatzstoffe und Verarbeitungshilfsmittel D) enthalten. Deren Anteil beträgt in der Regel bis zu 30 Gew.-% vorzugsweise bis zu 10 Gew.-%, bezogen auf das Gesamtgewicht der Komponenten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher und Flammschutzmittel.

Oxidationsverzögerer und Wärmestabilisatoren, die den thermoplastischen Massen gemäß der Erfindung zugesetzt werden können, sind z.B. Halogenide, ausgewählt aus der Gruppe von Metallen der Gruppe I des Periodensystems, z.B. Lithium-, Natrium-, Kalium-Halogenide, und Kupfer-(I)-Halogenide, z.B. Chloride, Bromide oder Iodide, oder Mischungen davon. Ferner kann man sterisch gehinderte Phenole, sekundäre, aromatische Amine, Hydrochinone, substituierte Vertreter dieser Gruppe und Mischungen dieser Verbindungen, vorzugsweise in Konzentration bis zu 1 Gew.-%, bezogen auf das Gewicht der Mischung, einsetzen.

Beispiele für UV-Stabilisatoren sind substituierte Resorcine, sterisch gehinderte Phenole, Salicylate, Benzotriazole und Benzophenone, die man im allgemeinen in Mengen bis zu 2 Gew.-% einsetzen kann.

Gleit- und Entformungsmittel, die man in der Regel bis zu 1 Gew.-% der thermoplastischen Masse zusetzen kann, sind, beispielsweise langkettige Fettsäuren oder deren Derivate wie Stearinsäure, Stearylalkohol, Stearinsäurealkylester und -amide sowie Ester des Pentaerythrits mit langkettigen Fettsäuren.

Als Flammschutzmittel kann man beispielsweise roten oder schwarzen Phosphor oder eine phosphorhaltige Verbindung in Mengen von 3 bis 10 Gew.-% einsetzen.

Bevorzugtes Flammschutzmittel ist elementarer Phosphor, insbesondere in Kombination mit glasfaserverstärkten Formmassen.

Weitere bevorzugte Flammschutzmittel sind organische Phosphorverbindungen wie die Ester der Phosphorsäure, phosphorigen Säure und von Phosphon- und Phosphinsäure sowie tertiäre Phosphine und Phosphinoxide. Als Beispiel sei Triphenylphosphinoxid genannt. Dieses kann allein oder vermischt mit Hexabrombenzol oder einem chlorierten Biphenyl und, wahlweise, Antimontrioxid verwendet werden.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis-(hydroxymethyl)-phosphoniumchlorid.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden.

Als Keimbildungsmittel können Natriumphenylphosphinat, Aluminiumoxid, Siliziumdioxid, Nylon 22 sowie bevorzugt Talkum eingesetzt werden, üblicherweise in Mengen bis zu 1 Gew.-%.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt. Die Mengen betragen üblicherweise bis zu 15 Gew.-%.

Die Herstellung der erfindungsgemäßen Formmassen kann nach an sich bekannten Verfahren erfolgen. Bevorzugt erfolgt die Herstellung durch Zugabe der Komponente B) sowie C) zur Schmelze der Komponente A) sowie gegebenenfalls D), wobei die Komponente A eine Viskositätszahl ≦ 190, vorzugsweise ≦ 150, und insbesondere ≦ 120 ml/g aufweist.

Zweckmäßigerweise verwendet man hierzu Extruder, z.B. Einschnekken- oder Zweischneckenextruder oder andere herkömmliche Plastifizierungsvorrichtungen wie Brabender-Mühlen oder Banbury-Mühlen.

Die Kunststoffmischungen unterwirft man danach in der Regel einer weiteren thermischen Behandlung, d.h. einer Nachkondensation in fester Phase. In Temperaggregaten wie z.B. einem Taumler-Mischer oder kontinuierlich sowie diskontinuierlich betriebenen Temperrohren tempert man die in der jeweiligen Bearbeitungsform vorliegende Formmasse, bis die Viskositätszahl des Polyamids die gewünschte VZ von 220 ml/g und darüber erreicht. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das erfindungsgemäße Verfahren erfolgt vorzugsweise in einer Inertgasatmosphäre, wobei Stickstoff und überhitzter Wasserdampf als Inertgase bevorzugt sind.

Die Verweilzeiten betragen im allgemeinen von 0,5 bis 50, vorzugsweise 4 bis 20 Stunden. Anschließend werden aus den Formmassen mittels üblicher Vorrichtungen für das Blasformen, Profilextrusion und Rohrextrusion Formteile hergestellt.

Die Schmelzviskosität der Formmassen ist soweit erhöht, daß sich faserverstärkte Formkörper mit großen Volumina herstellen lassen, welche eine gleichmäßige Wandstärke über das gesamte Formteil aufweisen. Bei der Verarbeitung ist die Fließfähigkeit gleichzeitig wesentlich größer, so daß in kürzeren Zeitabständen die gewünschten Formkörper herstellbar sind. Als Anwendungen seien Kraftstoff-, Schmiermittel- oder Bremsflüssigkeitsbehälter im KFZ genannt.

### Beispiele

### Komponente A:

A/1:Poly-ε-Caprolactam (PA 6) mit einer Viskositätszahl VZ von 184 ml/g (gemessen gemäß DIN 53 727, Ultramid® B35 der BASF AG).
A/2:PA 6 mit einer VZ von 215 ml/g (Ultramid® B4 der BASF AG).

### Komponente B

B/1:ein mit 6 Gew.-% Acrylsäure gepfropftes Polypropylen, MFI (190°C/2,16 kg) von 22 g/10 min. (Polybond® 1009 der BP Chemicals Ltd.). Schubmodul: 185 MPa.
B/2:Ethylencopolymerisat mit 7 Gew.-% Acrylsäure; MFI (190°C/2,16 kg) von 10,5 g/10 min. (Lucalen® A3710 MX der BASF AG).

### Komponente C:

C/1: Gemahlene Glasfaser mit 10 µm mittlerer Filamentdurchmesser und einer mittleren arithmetischen Faserlänge l von 158 µm, Schlichte: Aminosilan.
C/2: wie C/1, jedoch mit l = 105 µm
C/1V: Glasfaserroving (Endlosfaser) mit 9600 tex Gesamtstärke, 10 µm Einzelfilament-Durchmesser und Aminosilan-Schlichte (R 23 DX1 der Firma Owens Corning)
C/2V: Schnittglasfasern mit einer Faserlänge von 6 mm und 10 µm Filamentdurchmesser, Aminosilan-Schlichte (Silenka® 8044 der Firma PPG Ind.)
C/3V: wie C/2V jedoch mit 4,5 mm Faserlänge

### Komponente D

D/1: 20%iger Rußbatch aus PA 6 und Ruß
D/2: Wärmestabilisator auf KI/CuI Komplexbasis als Batch in PA 6 (1,5 Gew.-% Cu-Gehalt), bezogen auf D/2)..

### Herstellung der Formmassen

Auf einem Zweiwellenextruder (ZSK 53 von Werner + Pfleiderer) wurden bei 270°C, 40 kg/h Gesamtdurchsatz und einer Drehzahl von 250 U/min
76,5 Gew.-%Komponente A)
20 Gew.-% Komponente C)
1,5 Gew.-% Komponente B) sowie
1,0 Gew.-% eines 20 %igen Ruß-Batches in Polycaprolactam (D/1) und
1,0 Gew.-% eines CuI-Batches in Polycaprolactam (Cu-Gehalt in der Gesamtmischung 100 ppm, Komponente D/2)
konfektioniert, wobei die Glasfasern entweder in die Schmelze der übrigen Komponenten dosiert oder zusammen mit dem noch unaufgeschmolzenen Granulat der übrigen Komponenten zugegeben wurden (in der Tabelle angegeben). Die Mischung wurde verstrangt, in Wasser abgekühlt, granuliert und 12 h bei 80°C im Vakuum getrocknet.

Anschließend wurden die Produkte in einem Taumeltrockner unter N₂-Atmosphäre bei 190°C auf eine Viskositätszahl von ca. 275 ml/g getempert, wobei die Temperzeiten zwischen 10 - 12 h lagen. Bei Beispiel 12V wurde ein Extruder mit drastisch vergrößerten Knetzonen verwendet. Die Drehmomentaufnahme des Extruders war von 45 - 55 % des Maximaldrehmoments bei diesem Versuch auf 92 % erhöht, so daß es bei kurzfristigen Drehmomentspitzen zu mehreren Extruderstillständen durch autom. Abschaltungen wegen Drehmomentüberlastung kam. Dieser Versuch erreichte auch bei 24 h Temperzeit nur eine VZ von 262 ml/g.

Ein Versuch, Beispiel 8V, durch Absenken der Extrudertemperatur von 270 auf 235°C die Friktion zu erhöhen und damit die Faserlänge zu reduzieren, führte zu einem Anstieg der Drehmomentaufnahme des Extruders auf 75 %. Die Massetemperatur der Schmelze blieb mit 270°C fast unverändert (normal 272 - 275°C). Die Faserlänge war nicht signifikant verändert, so daß von diesem Versuch keine weiteren Daten erfaßt wurden.

### Blasformen:

Mit einer Extrusionsblasformmaschine Bekum BAE 5 (genutete Einzugszone) wurden bei 242°C Vierkantflaschen 400 x 80 x 80 mm geblasen. Das Werkzeug war auf 40°C temperiert und wurde mit Schließhubkalibrierung gefahren, der Blasdruck betrug 4,5 bar. Die Fahrbedingungen (Durchsatz, Druck, Düsenspaltöffnung) wurden bei den verschiedenen Versuchen konstant gehalten. Die Teile wogen ca. 400 g. Je 10 cm unterhalb bzw. oberhalb des Bodens bzw. Deckels des Hohlkörpers wurde die Wandstärke gemessen. Ziel war eine möglichst gleichmäßige Wandstärke über die Länge des Hohlkörpers.

### Meßmethoden

- Viskositätszahl VZ:: nach DIN 53727 an 0,5 %iger Lösung in 96 %iger Schwefelsäure (an Granulat)
- MVR:: nach DIN 53735 bei 250°C/10 kg Belastung (an Granulat)
- Zug-E-Modul:: nach DIN 53457 (an bei 280°C hergestellten Schulterstäben)
- Faserlängenverteilung:: Eine 10 g-Probe wurde bei 600°C 10 min verascht, der Rückstand in Silikonöl aufgenommen und von der Emulsion 1 Tropfen auf einen Objektträger gebracht und mit 20facher Vergrößerung fotografiert. Auf den Bildern wurden 500 Fasern mit Hilfe eines Digitalisiertabletts von Hand ausgezählt und davon der arithmetische Mittelwert der Faserlängen bestimmt. Den Bildrand berührende Fasern wurden ignoriert.

Die Zusammensetzungen der Formmassen und die Ergebnisse der Messungen sind der Tabelle zu entnehmen.

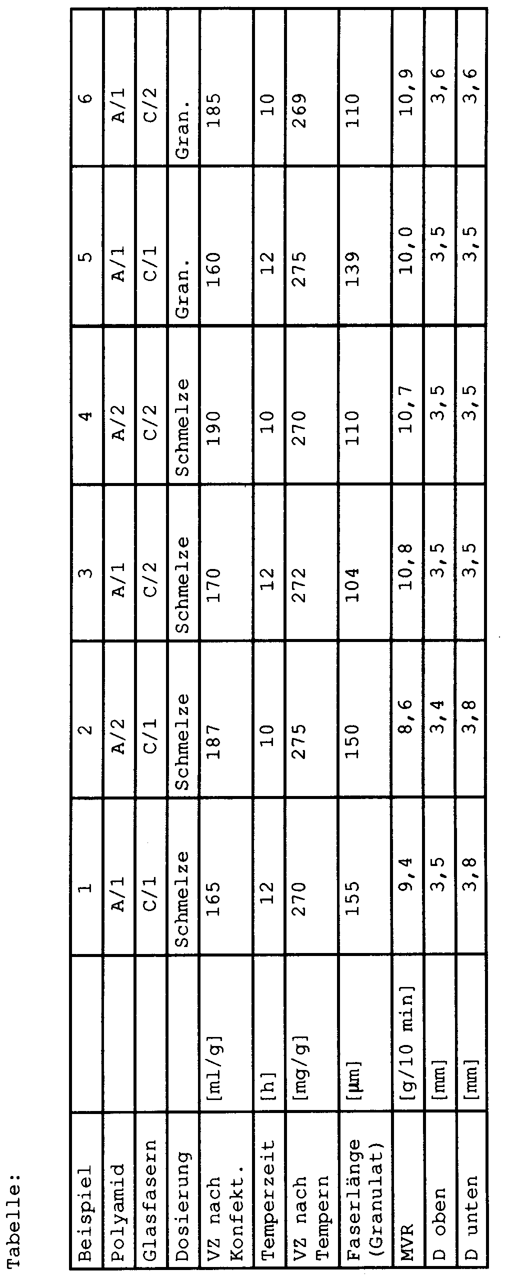

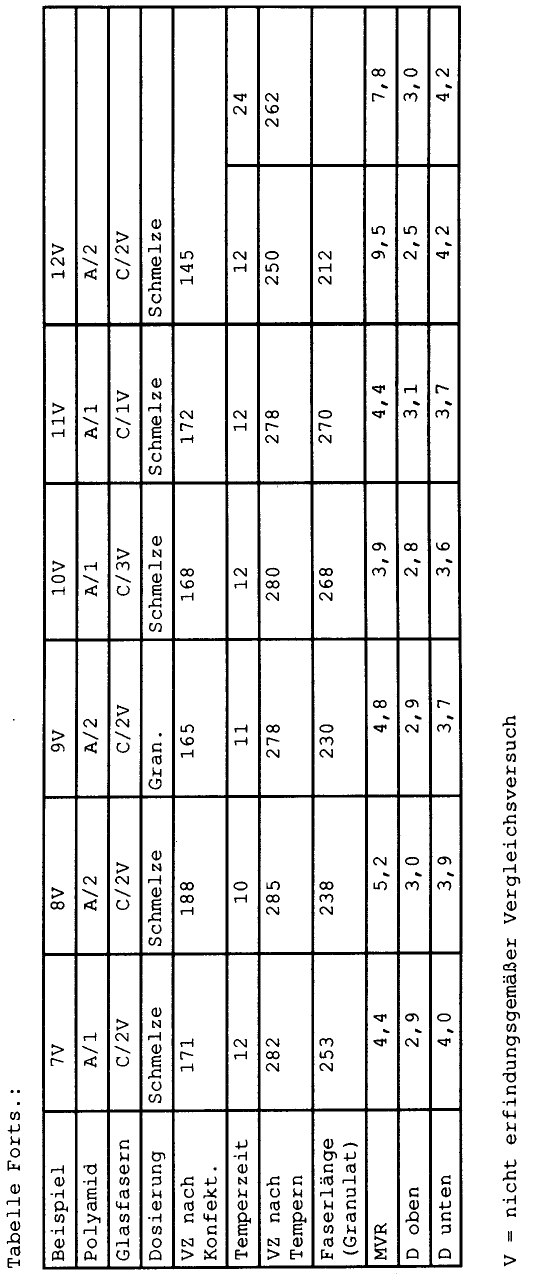

Die Ergebnisse zeigen, daß durch die Verwendung gemahlener sehr kurzer Glasfasern ein verbessertes Verarbeitungsverhalten beim Blasformen (gleichmäßigerere Wanddicke) erhalten wird. Gleichzeitig ist die Fließfähigkeit deutlich verbessert.

Der Versuch, ähnlich kurze Glasfaser-Längenverteilungen durch erhöhte Friktion im Extruder auf Basis von konventionellen Glasfasern einzustellen, führt nicht zum Ziel bzw. ergibt geschädigte, nicht auf hohe Molekulargewichte temperfähige Polymere.

## Patentansprüche

1. Thermoplastische Polyamidformmassen, enthaltend
A) 35 bis 98,5 Gew.-% eines Polyamids mit einer Viskositätszahl ≧ 220 ml/g
B) 0,5 bis 5 Gew.-% eines Olefinpolymerisates, aufgebaut aus
b₁) 40 - 99,8 Gew.-% mindestens eines α-Olefins mit 2 - 8 C-Atomen,
b₂) 0,2 - 20 Gew.-% einer ethylenisch ungesättigten Mono- oder Dicarbonsäure oder einem funktionellen Derivat einer solchen Säure,
C) 1 bis 60 Gew.-% eines faserförmigen Füllstoffes mit einer mittleren arithmetischen Faserlänge von 70 bis 180 µm
D) 0 bis 30 Gew.-% üblicher Zusatzstoffe und Verarbeitungshilfsmittel
wobei die Gewichtsprozente der Komponenten A) bis D) jeweils 100 % ergeben.

2. Thermoplastische Polyamidformmassen nach Anspruch 1, in denen die Komponenten C) aus Glasfasern aufgebaut ist.

3. Thermoplastische Polyamidformmassen nach den Ansprüchen 1 oder 2, in denen die Komponente C) einen mittleren Durchmesser von 8 - 20 µm aufweist.

4. Thermoplastische Polyamidformmassen nach den Ansprüchen 1 bis 3, in denen die Komponente C) bis zu 35 Gew.-%, bezogen auf (C) durch einen mineralischen Füllstoff ersetzt sein kann.

5. Thermoplastische Formmassen nach den Ansprüchen 1 bis 4, in denen die Komponente B) aus einem mit Acrylsäure oder/und Maleinsäureanhydrid gepfropften Polyethylen oder Polypropylen oder Ethylen-Propylencopolymer aufgebaut ist.

6. Verfahren zur Herstellung der Polyamidformmassen gemäß den Ansprüchen 1 bis 5, dadurch gekennzeichnet, daß die Komponenten B) und C) der Schmelze der Komponente A) und gegebenenfalls D) zugegeben wird, wobei die Komponente A) eine Viskositätszahl ≦ 190 ml/g aufweist und anschließend diese Mischung in fester Phase nachkondensiert.

7. Verfahren nach Anspruch 6, dadurch gekennzeichnet, daß die Festphasennachkondensation bei Temperaturen von 5 bis 50°C unterhalb des Schmelzpunktes der reinen Komponente A) unter Inertgasbedingungen über einen Zeitraum von 0,5 bis 50 Stunden durchgeführt wird.

8. Verwendung der thermoplastischen Polyamidformmassen gemäß den Ansprüchen 1 bis 5 zur Herstellung von Formkörpern durch Blasformen, Profilextrusion und Rohrextrusion.

9. Blasformkörper, erhältlich aus den thermoplastischen Polyamidformmassen gemäß den Ansprüchen 1 bis 5.

10. Profilextrudate, erhältlich aus den thermoplastischen Polyamidformmassen gemäß den Ansprüchen 1 bis 5.
